# EUROPÄISCHE PATENTSCHRIFT

(11) **EP 1 180 857 B1**
(45) Veröffentlichungstag und Bekanntmachung des Hinweises auf die Patenterteilung: **21.11.2007**
(21) Anmeldenummer: 01116263.3
(22) Anmeldetag: 05.07.2001
(51) Int. Cl.: H04B 7/08, H04B 7/02, H04B 7/12

(54) **Funkübertragungsverfahren**
Radio transmission method
Méthode de transmission radio

(30) Priorität: 17.08.2000 DE 10040299
(43) Veröffentlichungstag der Anmeldung: 20.02.2002
(73) Patentinhaber: Deutsche Telekom AG, 53113 Bonn (DE)
(72) Erfinder: Firner, Erwin, 77656 Offenburg (DE)

(56) Entgegenhaltungen:
- EP-A- 0 523 687
- GB-A- 911 611
- US-A- 2 530 748
- US-A- 4 835 792
- US-A- 5 983 118

## Beschreibung

Die Erfindung betrifft Verfahren und eine Empfangseinrichtung zur terrestrischen Funkübertragung von digital modulierten Signalen zu schnell bewegten Empfangseinrichtungen.

Als Nachfolgesystem für die heutigen UKW-FM-Hörfunknetze wurde im Rahmen des EUREKA 147-Projektes der DAB-Standard entwickelt und zur Einführungsreife gebracht. Zum Übertragen von Informationen in Fahrzeuge des öffentlichen Nah- und Fernverkehrs wurde, basierend auf dem DAB-System, DMB (Digital Multimedia Broadcast) entwickelt. Dieses System erlaubt es auch, Videosignale mit guter Qualität in fahrende Fahrzeuge zu übertragen. Für einen störungsfreien Empfang der Signale muß in den beabsichtigten Versorgungsgebieten eine Mindestfeldstärke mit einer hohen Versorgungswahrscheinlichkeit bereitgestellt werden. Dies kann nur mit Gleichwellennetzen (SFN; Single Frequency Network) kostengünstig erreicht werden. Je nach zur Verfügung stehendem Frequenzbereich sind, mit den standardisierten Übertragungsmodi, systembedingt obere Geschwindigkeitsgrenzen für einen störungsfreien Empfang vorgegeben. Diese Geschwindigkeitsgrenze wird durch die Dopplerverschiebung beim Empfang in Gleichwellennetzen erzeugt. Beispielsweise liegt bei Verwendung des L-Bandes die maximale Geschwindigkeit bei etwa 140 Stundenkilometern.

Das Dokument EP-A-0 523 687 offenbart ein System zur terrestrischen Übertragung von Signalen zu schnell bewegten Empfangseinrichtungen.

Für die Funkversorgung von ICE-Trassen und des geplanten Transrapid ist ein störungsfreier Empfang bei wesentlich höheren Geschwindigkeiten erforderlich. Dies ist mit derzeit verfügbaren Komponenten nur in relativ niederen Frequenzbereichen technisch möglich. Diese Frequenzbereiche werden derzeit stark durch andere Funkanwendungen genutzt. Auch künftig werden diese Frequenzbereiche - auch auf Grund nationaler und internationaler regulatorischer Prozesse - für flächendeckende Funkanwendungen zur Verfügung stehen. Bei Verwendung höherer Frequenzen müßte mit hohen Kosten für die Substitution der etablierten Anwendungen, bzw. mit hohen Kosten für die Frequenznutzung (siehe UMTS-Frequenzen) gerechnet werden.

Höhere Frequenzbereiche sind besser verfügbar. Nachteilig ist jedoch, daß hier physikalisch bedingt u.a. höhere Dopplerverschiebungen auftreten. Weiterhin tritt die Dopplerverschiebung besonders ausgeprägt in Versorgungsnetzen mit Streckencharakter auf, da hier mit hohen Geschwindigkeit gefahren wird und der bewegte Empfänger sich mit maximaler Relativgeschwindigkeit vom einen Sender wegbewegt und sich auf den anderen Sender zubewegt.

Es ist daher Aufgabe der vorliegenden Erfindung, die Nachteile des obenerwähnten Standes der Technik zu beseitigen und eine Möglichkeit zur Funkübertragung zu schnell bewegten Empfängern zu schaffen. Diese Aufgabe wird durch das Verfahren nach dem Patentanspruch gelöst.

Entlang einer Trasse, also an einer Straße oder auch an Bahngleisen, ist eine Senderkette installiert, wobei benachbarte Sender jeweils auf einer anderen Frequenz senden. Bei entsprechender Anordnung der Sender sind für eine Trasse zwei Frequenzen ausreichend. Die Sender sind in den von den Ausbreitungsbedingungen abhängigen Abständen so aufgebaut, daß von jedem Standort auf der Trasse zwei Sender in ausreichender Feldstärke empfangen werden. Bedingt durch die Fahrgeschwindigkeit des Fahrzeugs, in welchem eine Empfangseinrichtung eingebaut ist, werden die beiden Sender mit einer Dopplerverschiebung empfangen.

Die Empfangseinrichtung im Fahrzeug beinhaltet zwei Empfangsteile für die unterschiedlichen Frequenzen. Mittels einer automatischen Frequenznachregelung werden die Oszillatoren gemäß der Dopplerverschiebung nachgeregelt und diese so für die Zwischenfrequenz kompensiert. Beide Zwischenfrequenzsignale werden nun demoduliert und aufsummiert, und es ergibt sich als Mittelwert das ursprünglich aufmodulierte digitale Signal.

Weitere Einzelheiten der Erfindung werden in der Zeichnung anhand von schematisch dargestellten Ausführungsbeispielen beschrieben.

Hierbei zeigt:
- **Figur 1**: eine prinzipielle Feldstärkeverteilung und die Antennenrichtdiagramme entlang einer Trasse,
- **Figur 2**: schematisch die Versorgungsbereiche einer Trasse,
- **Figur 3**: den Aufbau der Empfangseinrichtung.

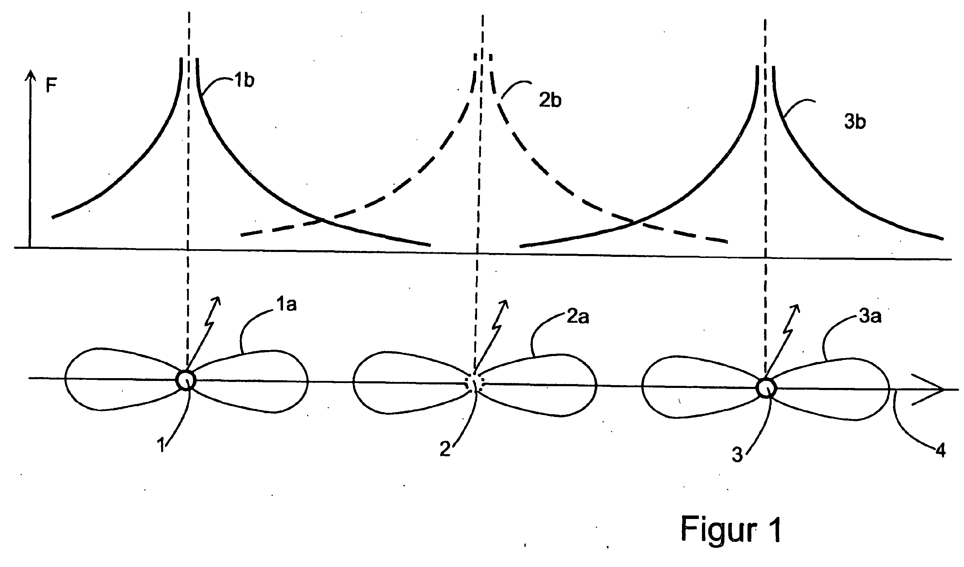

In **Figur 1** sind die an einer Trasse **4** aufgestellten Sender **1** bis **3** dargestellt. Ihre Richtdiagramme **1a** bis **3a** sind so gewählt, daß die Trasse bestmöglich ausgeleuchtet wird. Die jeweilige zugehörige Feldstärkeverteilung zeigen die Kurven **1b** bis **3b.** Bei der Durchfahrt auf einer Trasse **4** befindet sich eine Empfangseinrichtung immer im Empfangsbereich von mindestens zwei Sendern **1** bis **3,** wobei die Sender **1** und **3** mit gleicher Frequenz senden. Der Sender **2** sendet mit einer anderen Frequenz.

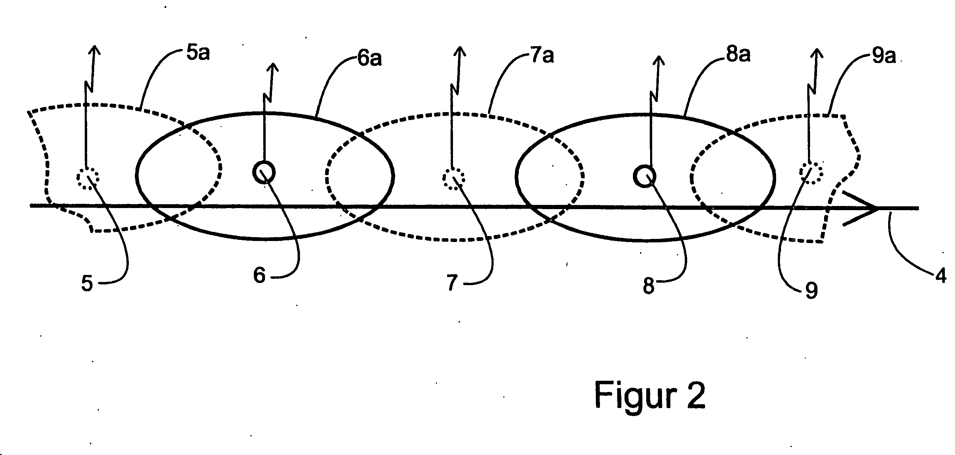

Die **Figur 2** zeigt eine Anordnung bei einem gewissen Abstand der Sender **5** bis **9** zur Trasse **4**, wobei benachbarte Sender jeweils mit unterschiedlichen Frequenzen senden. Durch die langsame relative Geschwindigkeit zu den Sendern beim Passieren auf der Trasse **4** ist in deren Nähe die Dopplerverschiebung geringer als in weitere Entfernung und der Empfang eines zweiten Senders entbehrlich. Außerdem ist hier durch die Nähe des Empfängers zum Sender die Feldstärke sehr hoch und damit der Empfang mit hoher Orts- und Zeitwahrscheinlichkeit gesichert. Nur in größerem Abstand ist im Bereich der Überlappungsgebiete der Versorgungsbereiche **5a** bis **9a** der Empfang zweier Sender zur Kompensation des Dopplereffektes notwendig.

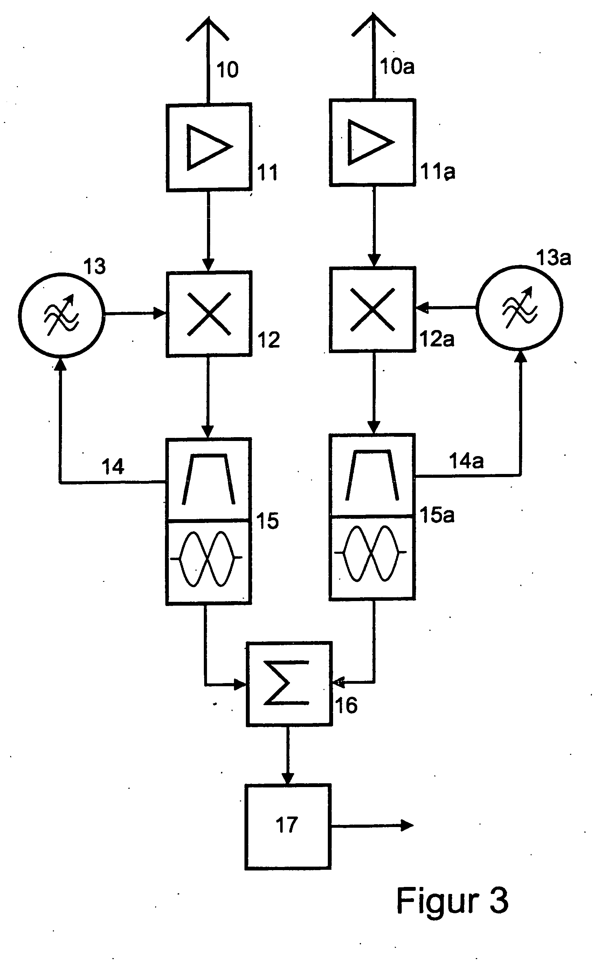

Die Empfangseinrichtung in **Figur 3** zeigt die beiden Empfangsteile bestehend aus Antennen **10** und **10a,** den Eingangsverstärkern **11** und **11a,** darauf folgend die Mischer **12** und **12a.** Die Mischfrequenz wird von den beiden spannungsgesteuerten Oszillatoren **13** und **13a** erzeugt. Diese werden durch eine automatische Frequenzregelung **14** und **14a** entsprechend der durch den Dopplereffekt beeinflußten jeweilige Empfangsfrequenz nachgeführt. Nach durchlaufen der Zwischenfrequenz- und Demodulatorstufen **15** und **15a** werden die hier gewonnenen Signale im Summenverstärker **16** aufsummiert und nach einer digitalen Signalbearbeitung **17** an die folgenden Stufen weitergegeben.

Das Signal weist jetzt keine störenden Effekte durch Dopplerverschiebung mehr auf und kann in einem DMB (Digital Multimedia Broadcast) - System weiterverarbeitet werden.

Außerdem weist das Summensignal wesentlich weniger tiefe Signaleinbrüche auf als ein Einzelsignal (SFN-Effekt), was letztendlich eine bessere Funkversorgung darstellt.

## Patentansprüche

1. Verfahren zur terrestrischen Funkübertragung von digital modulierten Signalen zu einer auf einer Trasse schnell bewegten Empfangseinrichtung,
**dadurch gekennzeichnet,**
a) **daß** entlang der Trasse (4) abwechselnd Sender mit unterschiedlichen Frequenzen (5,6,7,8,9), welche mit synchronisierten gleichen Signalen identisch moduliert werden, installiert sind und
b) diese sich kettenförmig mit einer abgestimmten Senderinfrastruktur entlang einer Trasse (4) aufreihen,
c) **daß** von der beweglichen Empfangseinrichtung mindestens zwei Sender mit unterschiedlichen Frequenzen empfangen werden, wobei der Abstand zum einen Sender zunimmt und zum anderen Sender abnimmt und
d) **daß** mindestens zwei Empfänger betrieben werden, von denen jeder mit einer automatischen Frequenznachregelung versehen ist, um die jeweils in Abhängigkeit von der Bewegung des Empfängers entstehende positive oder negative Dopplerverschiebung zu eliminieren,
e) und in der beweglichen Empfangseinrichtung aus den gleichzeitig empfangenen Signalen jeweils ein digitales Signal demoduliert wird, die Zwischenfrequenzen der Empfänger, welche jetzt die exakt gleiche Frequenz aufweisen, nach der Demodulation in einer Summierstufe (16) aufsummiert werden und dieses Signal der Verarbeitung in den weiteren Stufen (17) zugeführt wird.

## Claims

1. Method for ten-estrial radio transmission of digitally modulated signals to a receiving device that is moved rapidly along a route,
**characterized in that**
a) transmitters that have different frequencies (5, 6, 7, 8, 9) and are identically modulated with the same synchronized signals are installed in alternation along the route (4) and
b) these transmitters are arranged in a chain along a route (4) with a coordinated transmitter infrastructure,
c) **in that** at least two transmitters having different frequencies are received by the movable receiving device, wherein the distance to one transmitter increases and the distance to the other transmitter decreases, and
d) **in that** at least two receivers are operated, each of which is equipped with an automatic frequency adjustment system in order to eliminate the positive or negative Doppler shift resulting in each case from the motion of the receiver,
e) and in each case a digital signal is demodulated in the movable receiving device from the simultaneously received signals, the intermediate frequencies of the receivers - which now have exactly the same frequency - are summed in a summing stage (16) following demodulation, and this signal is delivered to the other stages (17) for processing.

## Revendications

1. Procédé de transmission radio terrestre de signaux modulés numériquement vers un dispositif de réception se déplaçant rapidement sur une voie,
**caractérisé en ce que**
a) des émetteurs de fréquences différentes (5, 6, 7, 8, 9), modulées de manière identique avec des signaux égaux synchronisés, sont installés en alternance le long de la voie (4) et
b) s'enchaînent le long d'une voie (4) selon une infrastructure d'émetteurs convenue,
c) le dispositif de réception mobile reçoit au moins deux émetteurs de fréquences différentes, la distance augmentant par rapport à un émetteur et diminuant par rapport à l'autre émetteur,
d) au moins deux récepteurs sont utilisés, dont chacun est muni d'un réglage de fréquence automatique afin d'éliminer le décalage Doppler positif ou négatif généré en fonction du mouvement du récepteur,
e) dans le dispositif de réception mobile, un signal numérique est démodulé respectivement à partir des signaux reçus simultanément ; après la démodulation, les fréquences intermédiaires des récepteurs qui présentent alors exactement la même fréquence, sont totalisées à un échelon de totalisation (16) et ce signal est traité aux échelons suivants (17).
